# EUROPÄISCHE PATENTSCHRIFT

(11) **EP 4 197 666 B1**
(45) Veröffentlichungstag und Bekanntmachung des Hinweises auf die Patenterteilung: **30.07.2025**
(21) Anmeldenummer: 22212880.3
(22) Anmeldetag: 12.12.2022
(51) Int. Cl.: B21D 24/16, B30B 15/08, B30B 15/06, B23Q 11/00, B23Q 1/25, B21D 28/02

(54) **WERKZEUGMASCHINE**
MACHINE TOOL
MACHINE-OUTIL

(30) Priorität: 14.12.2021 DE 102021133133
(43) Veröffentlichungstag der Anmeldung: 21.06.2023
(73) Patentinhaber: ElringKlinger AG, 72581 Dettingen (DE)
(72) Erfinder: Schäfer, Bernd, 35794 Mengerskirchen (DE); Wachholz, Ingo, 65594 Runkel (DE); Laumer, Sven, 65594 Runkel (DE)
(74) Vertreter: Pfiz/Gauss Patentanwälte PartmbB

(56) Entgegenhaltungen:
- DE-C1- 4 037 716
- JP-A- 2005 324 273
- US-A- 5 024 562
- US-A1- 2006 127 191
- US-A1- 2013 319 194
- US-A1- 2019 160 615
- US-A1- 2021 379 711

## Beschreibung

Die Erfindung betrifft eine Werkzeugmaschine, vorzugsweise eine Werkzeugmaschine mit einer Hubvorrichtung für zumindest eine ein Werkzeug umfassende Werkzeugvorrichtung, wobei insbesondere die Werkzeugmaschine zumindest hinsichtlich der Hubvorrichtung in der Art einer Presse und/oder einer Stanzmaschine ausgebildet ist. Die JP 2005 324273 A offenbart eine Werkzeugmaschine gemäß dem Oberbegriff des Anspruchs 1.

Die US 5 024 562 A offenbart eine Bohrmaschine. In den US 2019/160615 A1 und US 2006/127191 A1 und DE 40 37 716 C1 werden Maschinen offenbart.

Die der Erfindung zugrunde liegende Aufgabe besteht darin, eine Werkzeugmaschine hinsichtlich Flexibilität und Effizienz zu verbessern.

Gemäß der Erfindung wird diese Aufgabe gelöst durch eine Werkzeugmaschine gemäß dem Anspruch 1. Einige vorteilhafte Ausführungsformen sind in den abhängigen Ansprüchen definiert.

Beispielsweise ist ein Vorteil der Erfindung darin zu sehen, dass durch das angetriebene und/oder spanabhebende Werkzeug ein schneller und robuster Herstellungsprozess ermöglicht wird und insbesondere durch die Ausstattung mit der Hubvorrichtung eine schnelle Taktung bei der Werkzeugmaschine erreicht werden kann.

Insbesondere können beispielsweise für großvolumige Umformprozesse, bei welchen insbesondere Material von dem zu bearbeitenden Werkstück in einem Bereich entfernt werden muss, die herzustellenden Strukturen in dem Werkstück durch ein angetriebenes und/oder spanabhebendes Werkzeug günstiger ausgebildet werden als bei Druckumformprozessen, wie beispielsweise Pressen und/oder Prägen, da das zu entfernende Material nicht verdrängt wird, sondern aus dem zu bearbeitenden Bereich, insbesondere durch ein spanabhebendes Verfahren, entfernt wird. Vorzugsweise bleibt so in dem Werkstück ein Gefüge des Werkstoffes im Wesentlichen unverändert.

Insbesondere sind bei der erfindungsgemäßen Lösung geringere Presskräfte bei der Hubvorrichtung als beispielsweise bei Druckumformprozessen notwendig, sodass kleinere Werkzeugmaschinen eingesetzt werden können.

Vorteilhafterweise können durch das angetriebene und/oder spanabhebende Werkzeug auch komplexere Strukturen in dem Werkstück schnell und präzise ausgebildet werden, bei welchen mittels Druckumformprozessen mehrere Umformschritte notwendig wären.

Insbesondere ist das Werkzeug für eine Rotation bei einer Bearbeitung eines Werkstückes um eine Werkzeugachse rotierbar gelagert und angetrieben in der Werkzeugvorrichtung angeordnet.

Vorteilhafterweise weist das Werkzeug eine Schneide oder mehrere Schneiden für ein spanabhebendes Bearbeiten eines Werkstückes auf. Insbesondere ist die eine Schneide oder sind die mehreren Schneiden jeweils entlang einer Spannut an dem Werkzeug ausgebildet.

Bei einigen vorteilhaften Ausführungsformen ist das Werkzeug ein Bohrer.

Bei einigen vorteilhaften Ausführungsformen ist das Werkzeug ein Fräser.

Bei einigen vorteilhaften Ausführungsformen weist die Werkzeugvorrichtung genau ein Werkzeug auf.

Bei einigen bevorzugten Ausführungsformen weist die Werkzeugvorrichtung mehrere Werkzeuge auf.

Günstigerweise umfasst die Werkzeugvorrichtung eine Werkzeugaufnahme für ein Werkzeug, vorzugsweise mit einem Schnellbefestigungsmechanismus, beispielsweise einem Spannmechanismus, wodurch ein schneller Wechsel des Werkzeuges ermöglicht wird und so die Werkzeugmaschine zügig für eine andere auszubildende Struktur umgerüstet werden kann.

Vorteilhafterweise sind so durch die passende Auswahl eines Werkzeugs diverse Geometrien für auszubildende Strukturen durch die Werkzeugmaschine herstellbar.

Insbesondere weist die Werkzeugvorrichtung einen Antrieb für das angetriebene Werkzeug auf.

Vorzugsweise ist ein für den Antrieb erforderlicher Stromanschluss kompatibel mit einem für die Hubvorrichtung erforderlichen Stromanschluss, sodass eine Stromversorgung für die Hubvorrichtung und für den Antrieb in einfacher Weise realisiert werden kann.

Alternativ oder ergänzend wird die eingangs genannte Aufgabe bei vorteilhaften Ausführungsformen auch durch eine Werkzeugmaschine gelöst, welche eine Abstreiferplatte umfasst, wobei die Abstreiferplatte eine Durchgangsöffnung für ein ihr zugeordnetes Werkzeug der Werkzeugmaschine umfasst, wobei insbesondere zumindest bei einer Bearbeitung eines Werkstücks das zugeordnete Werkzeug durch die Durchgangsöffnung der Abstreiferplatte hindurch greift.

Insbesondere ist ein Vorteil hiervon, dass bei einer Bearbeitung eines Werkstücks das zugeordnete Werkzeug durch die Durchgangsöffnung der Abstreiferplatte hindurch greift und zumindest Teile des Werkstücks durch die Abstreiferplatte abgedeckt sind und so vorteilhafterweise vor einer Verschmutzung geschützt sind.

Vorzugsweise ist das zugeordnete Werkzeug ein angetriebenes und/oder spanabhebendes Werkzeug, wie insbesondere voranstehend erläutert, und abgetrennte Späne und/oder bei der Bearbeitung entstehende Partikel gelangen bei der Bearbeitung beispielsweise durch die Spannuten des Werkzeugs auf eine dem Werkstück abgewandte Seite der Abstreiferplatte und eine Verschmutzung des Werkstücks wird zumindest reduziert.

Erfindungsgemäß weist die Werkzeugmaschine eine Hubvorrichtung für eine das Werkzeug umfassende Werkzeugvorrichtung auf, insbesondere eine Hubvorrichtung mit einem oder mehreren der voranstehend und nachstehend erläuterten Merkmalen.

Insbesondere weist die Durchgangsöffnung in der Abstreiferplatte eine geometrische Form auf, die einer in einem zu bearbeitenden Werkstück durch das Werkzeug auszuformenden Struktur entspricht.

Insbesondere wird hierdurch ein von dem Werkzeug nicht zu bearbeitender Teil des Werkstückes abgedeckt und vorteilhafterweise vor Verschmutzungen geschützt.

Insbesondere entspricht zumindest in einer Richtung eine Ausdehnung der Durchgangsöffnung einer radialen Ausdehnung des Werkzeugs.

Insbesondere werden die Ausdehnungen der Durchgangsöffnung in zu einer Durchgangsrichtung der Durchgangsöffnung zumindest näherungsweise senkrecht verlaufenden Richtungen gemessen, wobei die Durchgangsöffnung sich in der Durchgangsrichtung durch die Abstreiferplatte zwischen zwei Seiten derselben hindurch erstreckt.

Die radiale Richtung, in welcher die radiale Ausdehnung des Werkzeugs gemessen wird, ist insbesondere eine radiale Richtung der Werkzeugachse. Insbesondere entspricht eine axiale Richtung der Werkzeugachse einer Vorschubrichtung des Werkzeugs.

Insbesondere ist das Werkzeug um die Werkzeugachse rotierbar gelagert.

Bei einigen vorteilhaften Ausführungsformen weist die Durchgangsöffnung in der Abstreiferplatte eine radiale Ausdehnung auf, welche im Wesentlichen einer radialen Ausdehnung des Werkzeugs entspricht. Dabei werden die radialen Ausdehnungen der Durchgangsöffnung und des Werkzeugs in einer zu der Werkzeugachse radialen Richtung gemessen. Insbesondere ist dabei die Durchgangsöffnung zur Werkzeugachse zumindest im Wesentlichen radialsymmetrisch ausgebildet.

Bei einigen vorteilhaften Ausführungen ist die radiale Ausdehnung des Werkzeugs entlang seiner axialen Erstreckung im Wesentlichen konstant.

Bei einigen günstigen Ausführungsformen weist das Werkzeug eine entlang der axialen Richtung der Werkzeugachse variierende radiale Ausdehnung auf. Vorzugsweise ist dann die radiale Ausdehnung der Durchgangsöffnung entsprechend der größten radialen Ausdehnung des Werkzeuges entsprechend ausgebildet.

Bei einigen günstigen Ausführungsformen weist die Werkzeugvorrichtung zumindest einen Schieber, an welchen das Werkzeug gekoppelt, insbesondere befestigt ist, auf und mit dem Schieber ist das Werkzeug insbesondere linear verfahrbar.

Vorzugsweise entspricht dann eine längliche Ausdehnung der Durchgangsöffnung einem Verfahrweg des zumindest einen Schiebers und beispielsweise weist die Durchgangsöffnung eine Breite auf, die einer radialen Ausdehnung des Werkzeugs bezüglich der Werkzeugachse entspricht.

Dabei weist dann vorteilhafterweise die Durchgangsöffnung eine der Länge des Verfahrweges entsprechende Länge auf.

Insbesondere entspricht so die Ausdehnung der Durchgangsöffnung in einer Richtung der Ausdehnung des Werkzeugs und in einer weiteren Richtung dem Verfahrweg des Werkzeugs bei einer Bearbeitung eines Werkstückes, sodass durch die Durchgangsöffnung ein zu bearbeitender Bereich freigelegt ist und daran angrenzende Bereiche des Werkstückes von der Abstreiferplatte bedeckt werden und so vorteilhafterweise vor Verschmutzungen geschützt werden.

Insbesondere weist der Schieber einen linearen Verfahrweg auf.

Insbesondere ist der insbesondere lineare Verfahrweg des Schiebers in einer zur Werkzeugachse radialen Richtung orientiert.

Vorteilhafterweise ist der insbesondere lineare Verfahrweg des zumindest einen Schiebers zumindest näherungsweise senkrecht an der Hubrichtung orientiert.

Insbesondere weist das Unterteil eine Werkstückauflage auf, auf welcher ein Werkstück bei einer Bearbeitung durch das zugeordnete Werkzeug aufliegt.

Insbesondere ist bei einer Bearbeitung eines Werkstückes durch das Werkzeug das Werkstück ortsfest und/oder in seiner Ausrichtung auf der Werkstückauflage festgelegt.

Vorteilhafterweise ist ein Bearbeitungsraum, in welchem ein zu bearbeitendes Werkstück bei der Bearbeitung durch das zugeordnete Werkzeug angeordnet ist, zwischen der Werkstückauflage und der Abstreiferplatte angeordnet.

Insbesondere begrenzen die Werkstückauflage und die Abstreiferplatte den Bearbeitungsraum an gegenüberliegenden Seiten.

Insbesondere ist die Abstreiferplatte derart angeordnet, dass diese bei einer Bearbeitung eines Werkstücks durch das zugeordnete Werkzeug, insbesondere im Bereich einer zu bearbeitenden Stelle des Werkstücks, auf dem Werkstück aufliegt.

Bei vorteilhaften Ausführungsformen ist vorgesehen, dass die Werkzeugmaschine eine Haltevorrichtung für ein zu bearbeitendes Werkstück umfasst.

Insbesondere kann so mit der Haltevorrichtung das zu bearbeitende Werkstück ortsfest und/oder in seiner Ausrichtung fest bei der Bearbeitung gehalten werden.

Günstigerweise umfasst die Haltevorrichtung die Abstreiferplatte.

Vorzugsweise ist die Haltevorrichtung federbeaufschlagt gelagert.

Beispielsweise umfasst das Oberteil der Bearbeitungsstation der Werkzeugmaschine ein starres Rahmengestell und die Haltevorrichtung.

Vorteilhafterweise ist das starre Rahmengestell mit der Hubvorrichtung gekoppelt und die Haltevorrichtung relativ zu dem Rahmengestell zumindest in einer Richtung, insbesondere in genau einer Richtung, insbesondere in der Hubrichtung, beweglich gelagert.

Vorzugsweise ist die Haltevorrichtung mit Vorspannung an dem starren Rahmengestell gelagert.

Vorteilhafterweise ist so ein Verfahren des Oberteils in der Hubrichtung ermöglicht und bei einem in Kontakt treten der Haltevorrichtung mit dem Werkstück wird das Werkstück durch ein Aufpressen der Haltevorrichtung gehalten und das starre Rahmengestell kann weiter in der Hubrichtung verfahren werden.

Insbesondere ist die Werkzeugvorrichtung starr an dem Rahmengestell befestigt.

Die Werkzeugmaschine umfasst einen insbesondere durch Wandabschnitte und/oder einen Bodenabschnitt und/oder einen Deckelabschnitt begrenzten Spanraum, wobei der Spanraum einen Durchgang für ein Werkzeug aufweist und das Werkzeug zumindest bei einer Bearbeitung eines Werkstücks durch den Durchgang durch den Spanraum hindurch ragt.

Vorteilhafterweise ist der Spanraum derart angeordnet, dass bei einer Bearbeitung eines Werkstücks von dem Werkzeug abgetrennte Späne in den Spanraum gelangen, wobei insbesondere die abgetrennten Späne über Spannuten in dem Werkzeug in den Spanraum gelangen.

Insbesondere ist so vorteilhafterweise eine Absonderung von abgetrennten Spänen von dem Werkstück weg in den Spanraum ermöglicht, um eine Verunreinigung des Werkstücks mit Spänen zumindest zu reduzieren.

Insbesondere wird der Durchgang durch den Spanraum von zwei gegenüberliegenden Durchgangsöffnungen in den Spanraum begrenzenden Elementabschnitten ausgebildet, wobei das Werkzeug zumindest bei einer Bearbeitung eines Werkstückes durch diese gegenüberliegenden Durchgangsöffnungen hindurch greift.

Bei bevorzugten Ausführungsformen sind eines oder mehrere der voranstehend erläuterten Merkmale, insbesondere bezüglich der Werkzeugvorrichtung, und/oder des Werkzeugs und/oder der Abstreiferplatte und/oder der Hubvorrichtung und/oder der Bearbeitungsstation und ihrer Teile vorgesehen.

Günstigerweise trennt die Abstreiferplatte den Spanraum von dem Bearbeitungsraum.

Vorzugsweise ist vorgesehen, dass der Spanraum auf einer einem zu bearbeitenden Werkstück zugewandten Seite von der Abstreiferplatte begrenzt wird.

So ist vorteilhafterweise auf einer Seite der Abstreiferplatte der Bearbeitungsraum und auf der anderen Seite der Spanraum angrenzend angeordnet. Vorteilhafterweise wird so eine besonders günstige Absonderung der abgetrennten Späne ermöglicht.

Insbesondere ist eine durch den Durchgang und insbesondere durch die Durchgangsöffnungen hindurch verlaufende geometrische Durchgangsachse definiert.

Insbesondere wird der Spanraum in axialer Richtung der Durchgangsachse von einem Bodenabschnitt und einem Deckelabschnitt begrenzt und in radialer Richtung der Durchgangsachse von zumindest einem Wandabschnitt begrenzt.

Vorzugsweise wird der Bodenabschnitt von der Abstreiferplatte ausgebildet.

Die Werkzeugmaschine umfasst eine Absaugvorrichtung zum Absaugen insbesondere von mit dem Werkzeug abgetrennten Spänen und/oder beispielsweise von Schmutzpartikeln.

Bei günstigen Ausführungsformen ist vorgesehen, dass die Abstreiferplatte zwischen einem Absaugbereich, aus welchem die Absaugvorrichtung absaugt, und dem Bearbeitungsraum angeordnet ist.

Insbesondere ist so der Absaugbereich auf einer Seite der Abstreiferplatte gelegen, welche der Seite, auf welcher der Bearbeitungsraum gelegen ist, gegenüberliegend angeordnet ist und so werden Späne und/oder Partikel, welche auf die dem Bearbeitungsraum gegenüberliegende Seite der Abstreiferplatte gelangen, von der Absaugvorrichtung abgesaugt.

Ein Absaugbereich der Absaugvorrichtung liegt in dem Spanraum. Vorzugsweise entspricht der Absaugbereich dem Volumen des Spanraums. Vorteilhafterweise werden so die in den Spanraum gelangten Späne und/oder Partikel von der Absaugvorrichtung abgesaugt.

Besonders günstig ist es, wenn der Spanraum mit dem Absaugbereich wirbelbegünstigend ausgebildet ist.

Vorteilhafterweise entstehen so in dem Absaugbereich in einer Absaugströmung der Absaugvorrichtung Wirbel, wodurch ein Entfernen von Spänen und/oder Partikeln verbessert wird.

Die wirbelbegünstigende Ausgestaltung des Spanraums kann in unterschiedlichster Weise realisiert werden.

Beispielsweise wird der Spanraum mit dem Absaugbereich zumindest abschnittsweise von zumindest einem bogenförmigen Wandabschnitt begrenzt.

Vorzugsweise mündet eine Einlassöffnung für eine einströmende Gasströmung in den Spanraum, wobei insbesondere durch die einströmende Gasströmung aus dem Absaugbereich abgesaugtes Gas ersetzt wird, sodass die einströmende Gasströmung eine Ausgleichsgasströmung ist.

Insbesondere ist ein die Einlassöffnung umfassender Einlass vorgesehen.

Vorzugsweise definiert der Einlass eine Einlassrichtung für die in den Spanraum einströmende Gasströmung.

Besonders günstig ist es, wenn die Einlassrichtung zumindest im Wesentlichen in Richtung einer lokalen Erstreckung eines den Spanraum begrenzenden Wandabschnittes, welcher an die Einlassöffnung angrenzend angeordnet ist, orientiert ist. Insbesondere ist die Einlassrichtung zumindest im Wesentlichen tangential zu einer Bogenform des an die Einlassöffnung angrenzend angeordneten Wandabschnittes orientiert.

Vorteilhafterweise strömt so die einströmende Ausgleichsströmung an dem Wandabschnitt entlang und wird insbesondere durch dessen Bogenform abgelenkt, um vorzugsweise in definierter Weise einen Wirbel auszubilden.

Insbesondere weist die Absaugvorrichtung zum Absaugen einen Absaugstutzen auf.

Günstigerweise öffnet sich eine Absaugöffnung in den Spanraum, aus welcher durch die Absaugvorrichtung abgesaugt wird. Beispielsweise ist der Absaugstutzen in der Absaugöffnung angeordnet.

Bei einigen günstigen Ausführungsformen ist vorgesehen, dass durch die Absaugvorrichtung in vertikaler Richtung das abzusaugende Gas abgesaugt wird, insbesondere in vertikaler Richtung aus dem Spanraum abgesaugt wird.

Insbesondere ist die vertikale Richtung zumindest näherungsweise parallel zu der Vorschubrichtung des Werkzeugs ausgerichtet.

Günstigerweise verläuft die vertikale Richtung zumindest näherungsweise senkrecht zu einer flächenmäßigen Erstreckung des Bodenabschnitts des Spanraums und/oder verläuft zumindest näherungsweise senkrecht zu einer flächenmäßigen Erstreckung der Abstreiferplatte.

Bei einigen günstigen Ausführungsformen ist eine sich in vertikaler Richtung insbesondere zunehmend erhebende Rampe vorgesehen.

Vorzugsweise erhebt sich die Rampe insbesondere kontinuierlich ansteigend über den Bodenabschnitt des Spanraums und/oder über eine Oberfläche der Abstreiferplatte, wobei diese Oberfläche dem Bearbeitungsraum abgewandt ist und den Spanraum begrenzt.

Insbesondere ist die Rampe in dem Absaugbereich, vorzugsweise in unmittelbarer Nähe des Absaugstutzens und/oder der Absaugöffnung angeordnet.

Vorteilhafterweise wird so eine abzusaugende Gasströmung von der Rampe in vertikaler Richtung abgelenkt und insbesondere zu dem Absaugstutzen und/oder zu der Absaugöffnung zugeführt.

Bei einigen günstigen Ausführungsformen ist vorgesehen, dass die Werkzeugmaschine genau eine Bearbeitungsstation zur Bearbeitung eines Werkstückes umfasst.

Bei anderen vorteilhaften Ausführungsformen ist vorgesehen, dass die Werkzeugmaschine mehrere Bearbeitungsstationen umfasst, wobei insbesondere ein zu bearbeitendes Werkstück zur Bearbeitung von einer Bearbeitungsstation zur nächsten weitergeführt wird.

Insbesondere ist dabei die Werkzeugmaschine als Werkzeugfolgeverbundmaschine ausgebildet.

Insbesondere ist die Hubvorrichtung der Werkzeugmaschine für eine in einer Hubrichtung ausgerichtete Linearbewegung der Werkzeugvorrichtung der zumindest einen Bearbeitungsstation ausgebildet.

Insbesondere umfasst die genau eine Bearbeitungsstation oder jede der mehreren Bearbeitungsstationen jeweils ein an die Hubvorrichtung gekoppeltes und insbesondere linear verfahrbares Oberteil und ein stationärer Unterteil insbesondere mit einer Werkstückauflage zur Auflage eines zu bearbeitenden Werkstückes.

Insbesondere weist die genau eine Bearbeitungsstation oder zumindest eine Bearbeitungsstation der mehreren Bearbeitungsstationen eine Werkzeugvorrichtung mit einem angetriebenen und/oder spanabhebenden Werkzeug, insbesondere wie voranstehend erläutert, auf.

Bei mehreren Bearbeitungsstationen ist vorzugsweise vorgesehen, dass zumindest eine Bearbeitungsstation eine ein druckumformendes Werkzeug umfassende Werkzeugvorrichtung aufweist. Insbesondere ist das druckumformende Werkzeug zum Stanzen und/oder Prägen ausgebildet.

Insbesondere ist bei der Hubvorrichtung eine Grundstellung definiert, aus welcher die Hubvorrichtung günstigerweise die Hubbewegung der jeweiligen Hübe ausführt.

Insbesondere ist in der Grundstellung bei der einen Bearbeitungsstation oder bei den mehreren Bearbeitungsstationen der jeweilige Bearbeitungsraum ausreichend groß, sodass ein Werkstück in diesen eingeführt und herausgenommen werden kann.

Insbesondere ist bei der Hubvorrichtung eine Endstellung definiert, bis zu welcher die Hubvorrichtung bei einem jeweiligen Hub aus der Grundstellung heraus in der Hubrichtung verfährt.

Insbesondere erfolgt eine Bearbeitung eines Werkstücks in einem Endbereich des Verfahrweges bei einem Hub, insbesondere bis zu der Endstellung.

Vorteilhafterweise ist bei der Hubvorrichtung zumindest eine Beaufschlagungsstellung vorgesehen, bei welcher durch eine Beaufschlagung ein zu bearbeitendes Werkstück in dem Bearbeitungsraum der zumindest einen Bearbeitungsstation insbesondere durch die Haltevorrichtung beaufschlagt wird sowie vorzugsweise ortsfest und/oder in seiner Ausrichtung fest gehalten wird.

Insbesondere ist vorgesehen, dass bei einem von der Hubvorrichtung ausgeführten Hub aus der Grundstellung heraus zunächst die zumindest eine Beaufschlagungsstellung erreicht wird und der Hub darüber hinaus bis zu der Endstellung der Hub ausgeführt wird.

Insbesondere erfolgt dabei zwischen der zumindest einen Beaufschlagungsstellung und der Endstellung eine Bearbeitung eines Werkstückes durch ein Werkzeug oder mehrere Werkzeuge der Werkzeugmaschine.

Insbesondere ist die Hubvorrichtung ausgebildet, um lediglich jeweils einen vordefinierten Hub aus der Grundstellung bis zu der Endstellung auszuführen.

Beispielsweise ist die Hubvorrichtung lediglich stellungsdefiniert verfahrbar, insbesondere zwischen der Grundstellung und der Endstellung.

Insbesondere ist dabei lediglich die Endstellung definiert und bei jedem Hub verfährt die Hubvorrichtung bis zur gleichen vordefinierten Endstellung.

Beispielsweise wird die Endstellung durch zumindest einen mechanischen Anschlag definiert, wobei die Hubvorrichtung den Hub ausführt, bis zumindest ein an diese gekoppelter Abstandshalter an den Anschlag anschlägt.

Vorzugsweise ist die Hubvorrichtung ausgebildet, den jeweiligen, insbesondere vordefinierten Hub, getaktet auszuführen.

Insbesondere wird so ein schneller, robuster Herstellungsprozess für die Massenfertigung ermöglicht.

Insbesondere ist die Werkzeugmaschine für eine Fertigungsstraße ausgebildet.

Insbesondere wird die eingangs genannte Aufgabe bei vorteilhaften Ausführungsformen auch durch eine Fertigungsstraße mit einer Werkzeugmaschine, die eines oder mehrere der voranstehend genannten Merkmale aufweist, gelöst.

Insbesondere übertragen sich die im Zusammenhang mit den voranstehend genannten Merkmalen erläuterten Vorteile auch auf die Fertigungsstraße, wobei die Vorteile sich dabei besonders günstig auswirken, da durch die Werkzeugmaschine eine schnelle Taktung und robuste Herstellung eines Erzeugnisses in der Fertigungsstraße ermöglicht wird.

Voranstehend und nachstehend sind Merkmale, welche als insbesondere und/oder günstigerweise und/oder vorteilhafterweise und/oder beispielsweise und/oder als bevorzugt und/oder dergleichen vorgesehen beschrieben werden, optionale Merkmale, welche insbesondere erfinderische Weiterentwicklungen der Grundidee der Erfindung darstellen, aber für den grundsätzlichen Erfolg der Erfindung nicht wesentlich sind.

Voranstehend und nachfolgend ist unter der Formulierung zumindest im Wesentlichen im Zusammenhang mit einer Angabe insbesondere zu verstehen, dass technisch irrelevante und/oder technisch bedingte Abweichungen von der zumindest im Wesentlichen angegebenen Angabe mitumfasst sind.

Voranstehend und nachfolgend ist unter der Formulierung zumindest näherungsweise im Zusammenhang mit einem Merkmal insbesondere zu verstehen, dass dieses Merkmal zumindest im Wesentlichen angegeben ist und/oder dass Abweichungen, beispielsweise von dem angegebenen Wert, von bis zu +/-20 %, vorzugsweise von bis zu +/-10 %, insbesondere von bis zu +/-5 %, von der zumindest näherungsweise angegebenen Angabe mitumfasst sind.

Vorzugsweise sind Abweichungen von bis zu 10°, insbesondere von bis zu 5°, beispielsweise von bis zu 1° von einer zumindest näherungsweise und/oder im Wesentlichen angegebenen Richtung mitumfasst.

Bevorzugte Ausbildungen und Merkmale der Erfindung und Vorteile derselben sind Gegenstand des nachfolgend beschriebenen und in der Zeichnung beispielhaft dargestellten Ausführungsbeispiels mit Varianten.

Der Schutzumfang wird durch die Ansprüche definiert.

Bevorzugte Merkmale und Vorteile der Erfindung sind Gegenstand der nachfolgenden detaillierten Beschreibung und zeichnerischen Darstellung eines Ausführungsbeispiels.

In der Zeichnung zeigen:
- Fig. 1: eine perspektivische Darstellung einer Werkzeugmaschine;
- Fig. 2: einen Schnitt durch die Werkzeugmaschine;
- Fig. 3: eine ausschnittsweise vergrößerte Darstellung des Schnittes der Fig. 2 im Bereich eines Bearbeitungsraumes, eines Werkzeuges und einer Abstreiferplatte;
- Fig. 4: Darstellungen verschiedener Fräser als Beispiele für spanabhebende Werkzeuge;
- Fig. 5: einen Schnitt durch eine Entspanungseinheit mit einem Spanraum und einer Abstreiferplatte;
- Fig. 6: einen weiteren Schnitt durch die Entspanungseinheit;
- Fig. 7: eine perspektivische Aufsicht auf ein Abstreiferelement mit einer Abstreiferplatte;
- Fig. 8: eine Darstellung eines zu bearbeitenden und bearbeiteten Werkstücks;
- Fig. 9: eine schematische Darstellung einer Folgeverbundwerkzeugmaschine;
- Fig. 10: eine Darstellung einer Werkzeugvorrichtung mit einem Schiebersystem.

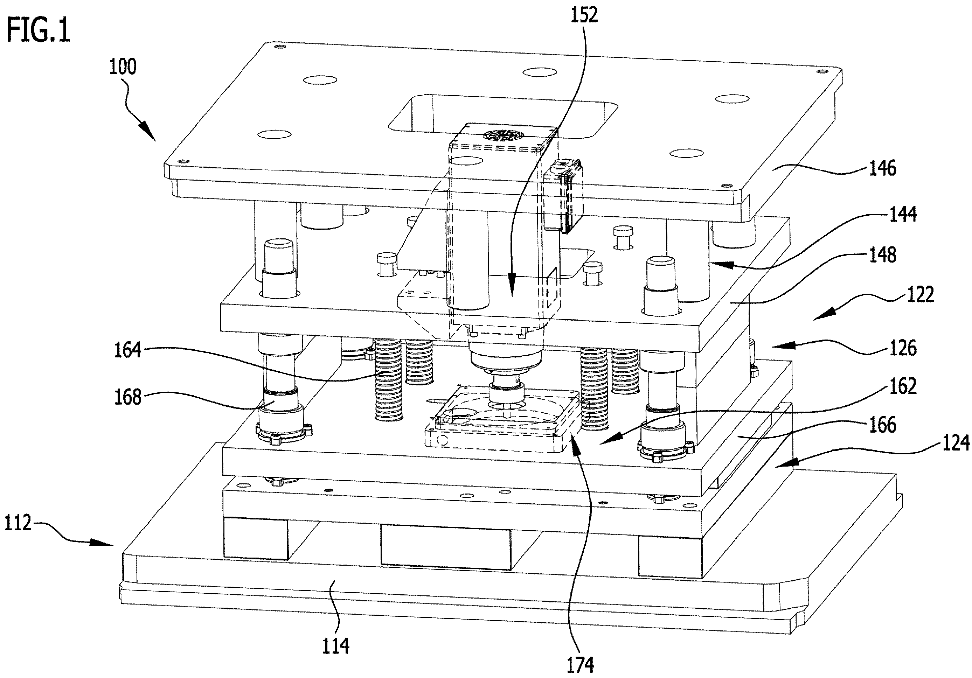

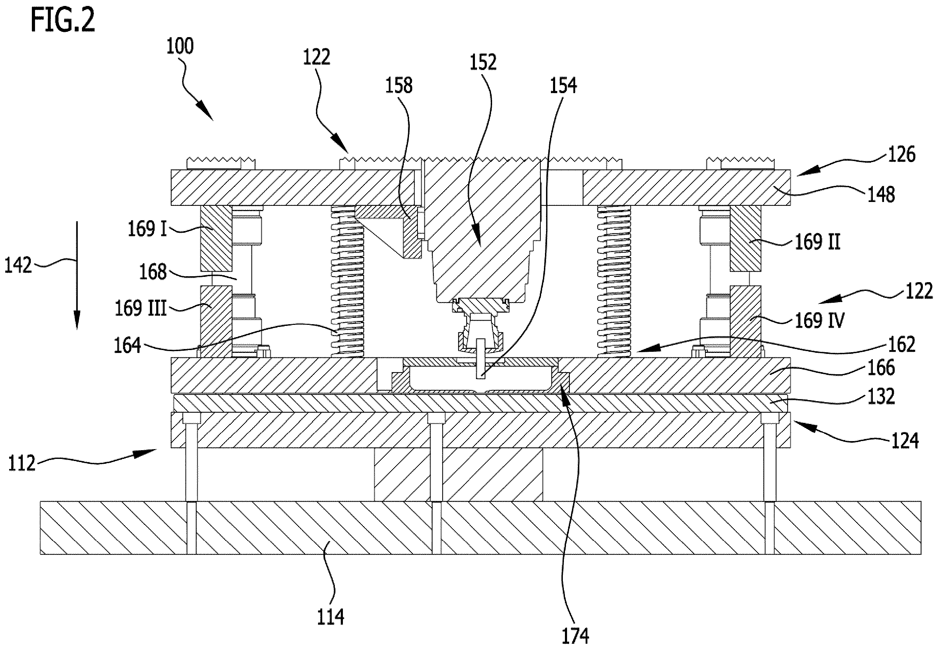

Ein Ausführungsbeispiel einer im Ganzen mit 100 bezeichneten Werkzeugmaschine, welches beispielhaft in den Figuren dargestellt ist, umfasst ein Maschinengestell 112 als tragende Struktur, welche einen Maschinenfuß 114 für einen sicheren und ortsfesten Stand der Werkzeugmaschine 100 aufweist, sowie zumindest eine Bearbeitungsstation 122 mit einem aus dem Maschinengestell 112 ausgebildeten oder mit diesem fest und starr verbundenen, stationären Unterteil 124 und einem relativ zu dem Unterteil 124 beweglichen Oberteil 126, wie beispielhaft in den Fign. 1 und 2 dargestellt ist.

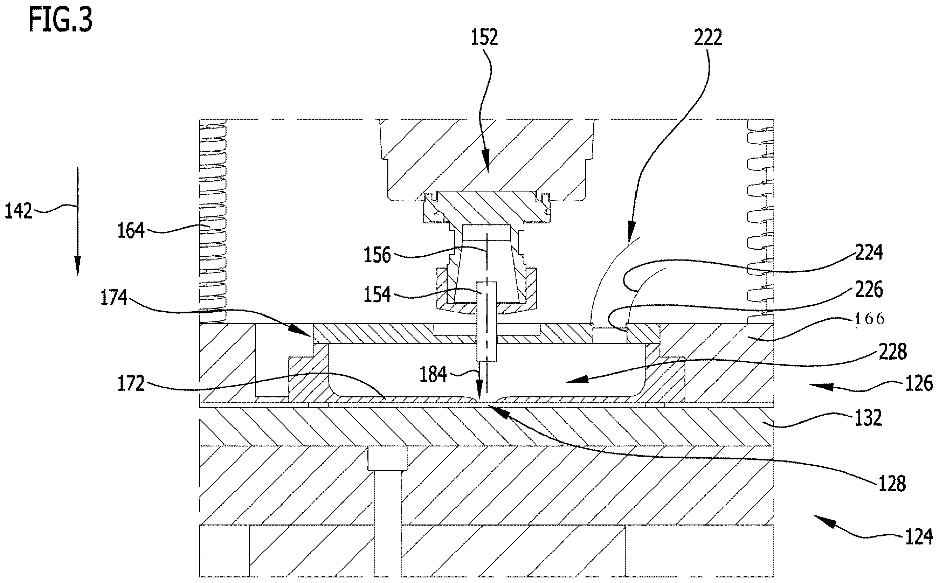

Zwischen dem Unterteil 124 und dem Oberteil 126 ist ein Bearbeitungsraum 128 festgelegt, der beispielhaft in Fig. 3 dargestellt ist.

Der Bearbeitungsraum 128 ist dafür vorgesehen und so ausgebildet, dass darin ein zu bearbeitendes Werkstück an der Bearbeitungsstation 122 bearbeitet werden kann.

Insbesondere umfasst das Unterteil 124 eine den Bearbeitungsraum 128 begrenzende Werkstückauflage 132, welche beispielsweise als Maschinentisch ausgebildet ist, wobei bei einer Bearbeitung eines zu bearbeitenden Werkstücks dieses auf der Werkstückauflage 132 aufliegt.

Das Oberteil 126 ist an eine zeichnerisch nicht explizit dargestellte Hubvorrichtung gekoppelt, durch welche das Oberteil 126 relativ zu dem Unterteil 124 und insbesondere relativ zu dem Maschinengestell 112 in einer linearen Hubrichtung 142 verfahrbar ist und insbesondere wird das Oberteil 126 von der Hubvorrichtung in der Hubrichtung 142 in Richtung auf das Unterteil 124 zu beaufschlagt.

Insbesondere ist die Hubvorrichtung ausgebildet, um in zeitlicher Abfolge, vorzugsweise getaktet, eine definierte Hubbewegung aus einer Grundstellung heraus in der Hubrichtung 142 auszuführen.

Somit ist insbesondere die Werkzeugmaschine 100 zumindest bezüglich der Hubvorrichtung in der Art einer Presse ausgebildet.

Das Oberteil 126 umfasst ein starres Rahmengestell 144, welches beispielsweise eine Oberplatte 146 und eine Befestigungsplatte 148, welche beispielhaft in Fig. 1 dargestellt sind, aufweist, wobei die Oberplatte 146 und die Befestigungsplatte 148 in der Hubrichtung 142 versetzt zueinander angeordnet sind und die Befestigungsplatte 148 näher zu dem Unterteil 124 angeordnet ist. Die Oberplatte 146 und die Befestigungsplatte 148 sind starr miteinander verbunden.

Die Hubvorrichtung ist an das starre Rahmengestell 144, insbesondere an die Oberplatte 146 gekoppelt.

Außerdem umfasst das Oberteil 126 eine Werkzeugvorrichtung 152 mit einem Werkzeug 154 zum Bearbeiten des Werkstücks.

Bei der in den Figuren beispielhaft dargestellten Variante umfasst die Werkzeugvorrichtung 152 genau ein Werkzeug 154.

Bei anderen Varianten des Ausführungsbeispiels umfasst die Werkzeugvorrichtung 152 mehrere Werkzeuge 154.

Die Werkzeugvorrichtung 152 ist fest und vorzugsweise starr mit dem Rahmengestell 144, beispielsweise an der Befestigungsplatte 148, befestigt.

Das Werkzeug 154 ist derart in der Werkzeugvorrichtung 152 angeordnet, dass in einer Bearbeitungsstellung des Oberteils 126 relativ zu dem Unterteil 124 das Werkzeug 154 in den Bearbeitungsraum 128 hinein ragt und so das Werkstück durch das Werkzeug 154 bearbeitet werden kann und in einer Grundstellung das Werkzeug 154 zumindest teilweise außerhalb des Bearbeitungsraums 128 angeordnet ist, wobei durch die Hubvorrichtung das Oberteil 126 in der Hubrichtung 142 zwischen zumindest der Grundstellung und der Bearbeitungsstellung verfahren werden kann, so dass die Hubrichtung 142 auch einer Vorschubrichtung des Werkzeugs 154 entspricht.

Insbesondere ist das Werkzeug 154 in der Grundstellung so angeordnet, dass das Werkstück von der Bearbeitung in den Bearbeitungsraum eingebracht und nach der Bearbeitung herausgenommen werden kann.

Das Werkzeug 154 ist insbesondere ein spanabhebendes Werkzeug, beispielsweise ein Bohrer oder ein Fräser, welches vorteilhafterweise Schneiden für die Spanabhebung aufweist und insbesondere Spannuten, entlang welcher sich die Schneiden erstrecken. Insbesondere werden durch die Schneiden von dem Werkstück abgetrennte Späne entfernt werden.

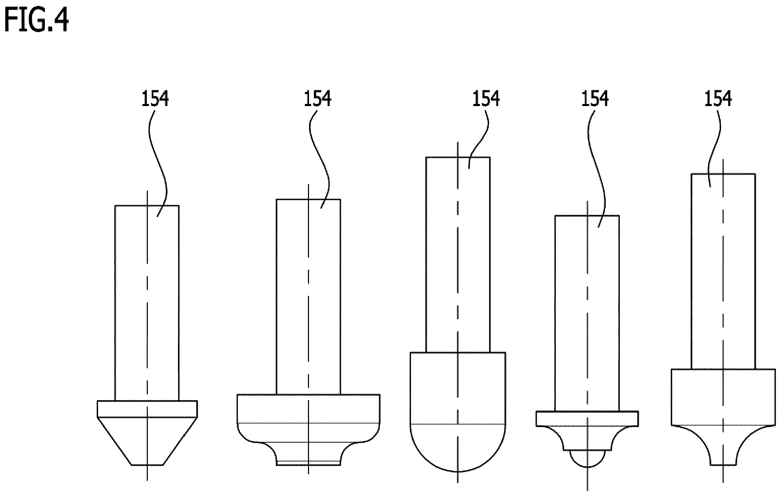

Beispielhaft sind Fräser in Fig. 4 dargestellt, wobei der Fräser beispielsweise ein Tannenbaumfräser oder ein Halbkugelfräser oder ein Fräser mit einer anderen Geometrie oder Kombination von Geometrien ist.

Insbesondere ist das Werkzeug 154 ein angetriebenes Werkzeug, das durch einen Antrieb in der Werkzeugvorrichtung 152 zu einer Bewegung in der Werkzeugvorrichtung 152, insbesondere zu einer Rotation um eine Werkzeugachse 156, angetrieben wird. Insbesondere ist eine axiale Richtung der Werkzeugachse 156 zumindest im Wesentlichen parallel zu der Hubrichtung 142 ausgerichtet.

Vorteilhafterweise umfasst das Oberteil 126 eine Haltevorrichtung 162, mit welcher ein zu bearbeitendes Werkstück bei dessen Bearbeitung gehalten werden kann.

Insbesondere umfasst die Haltevorrichtung 162 eine vorzugsweise mit Federn 164 federbeaufschlagte Halteplatte 166, welche mit Lagern 168 an dem starren Rahmengestell in Richtung der linearen Hubrichtung 142 beweglich, gelagert ist. Insbesondere ist die Halteplatte 166 federbeaufschlagt und beweglich an der Befestigungsplatte 148 gelagert.

Die Halteplatte 166 ist in der Hubrichtung 142 dem Unterteil 124, insbesondere der Werkstückauflage 132, gegenüberliegend angeordnet und begrenzt zumindest teilweise den Bearbeitungsraum 128.

Bei der Hubbewegung trifft so die Haltevorrichtung 162 insbesondere mit der Halteplatte 166 auf ein in dem Bearbeitungsraum 128 angeordnetes Werkstück auf und beaufschlagt dieses in zumindest einer Beaufschlagungsstellung.

Dabei ist eine weitere Bewegung des Rahmengestells 144 mit der Werkzeugvorrichtung 152 in der Hubrichtung 142 während des Hubs ermöglicht, da die Haltevorrichtung 162 relativ zu dem Rahmengestell 144 beweglich an diesem gelagert angeordnet ist.

Insbesondere sind Abstandhalter 169 vorgesehen, welche eine definierte Endstellung des Oberteils 126 in der Hubrichtung 142 festlegen.

Beispielsweise sind Abstandhalter 169I und 169II an dem starren Rahmengestell 144 ausgebildet und/oder Abstandhalter 169III und 169IV an der Haltevorrichtung 162 vorgesehen. Beispielsweise sind ein oder einige Abstandhalter 169I und 169II an der Befestigungsplatte 148 angeordnet und ein jeweiliger einem der Abstandhalter an der Befestigungsplatte gegenüberliegender Abstandhalter 169III und 169IV an der Halteplatte 166 angeordnet.

Bei einem maximal erlaubten Hub für das Oberteil 126 bilden die Abstandhalter 169 einen Anschlag, sodass die Hubbewegung getoppt wird und die Hubvorrichtung bewegt das Oberteil 126 wieder zurück in die Grundstellung.

Die Haltevorrichtung 162 umfasst eine Abstreiferplatte 172, welche den Bearbeitungsraum 128 mit einer dem Unterteil 124, insbesondere der Werkstückauflage 132, zugewandten Auflageseite 176 begrenzt, so dass der Bearbeitungsraum 128 in der Hubrichtung 142 zwischen dem Unterteil 124, insbesondere der Werkstückauflage 132, und der Abstreiferplatte 172 angeordnet ist, wie beispielhaft in Fig. 3 dargestellt ist.

Vorzugsweise ist die Abstreiferplatte 172 insbesondere als Teil einer Entspanungseinheit 174 mit der Halteplatte 166 fest verbunden, wobei hierfür die Halteplatte 166 insbesondere eine Aussparung, in welcher die Abstreiferplatte 172 und insbesondere die Entspannungseinheit 174 angeordnet ist, aufweist.

Günstigerweise ist die Abstreiferplatte 172 und insbesondere die Entspanungseinheit 174 durch einen Formschluss und/oder mit Befestigungselementen an der Halteplatte 166 befestigt.

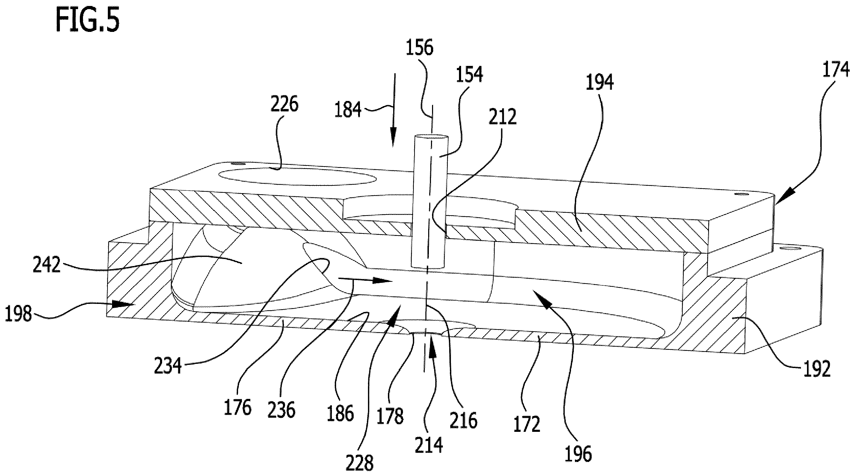

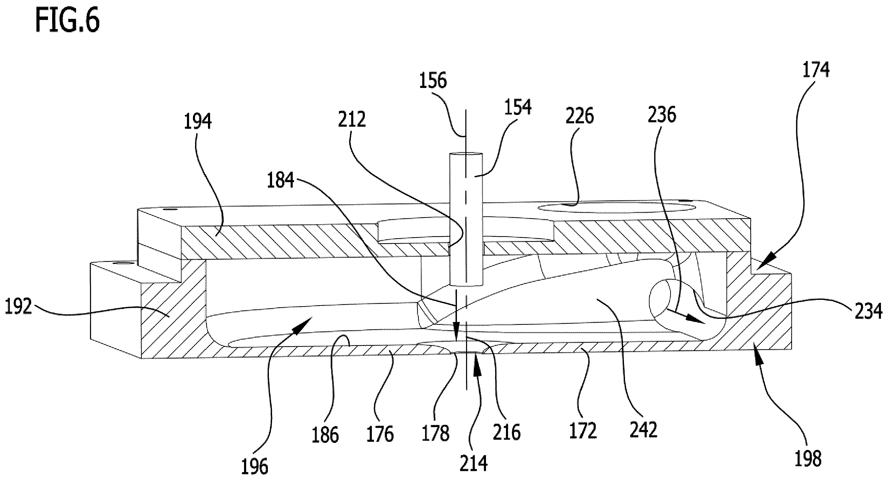

Die Entspannungseinheit 174 ist beispielhaft in den Fign. 5 und 6 dargestellt.

Die Abstreiferplatte 172 weist eine Durchgangsöffnung 178 auf, welche von der Auflageseite 176 durchgängig bis zu einer in der axialen Richtung der Werkzeugachse 156 und damit einer Vorschubrichtung der Werkzeugvorrichtung 152 gegenüberliegenden und dem Bearbeitungsraum 128 abgewendeten Seite 186 der Abstreiferplatte 172 durch diese sich hindurch erstreckt.

Dabei ist die Abstreiferplatte 172 mit der Durchgangsöffnung 178 derart in der Haltevorrichtung 162 ausgerichtet, dass in Beaufschlagungsstellungen des Oberteils 126 die Auflageseite 176 auf dem Werkstück aufliegt und außerdem bei einer Bearbeitung eines Werkstückes, also in Bearbeitungsstellungen des Oberteils 126, das Werkzeug 154 durch die Durchgangsöffnung 178 hindurch ragt und auf das Werkstück zur Bearbeitung einwirkt.

Insbesondere ist dabei eine Ausdehnung der Durchgangsöffnung 178 zumindest näherungsweise senkrecht zu deren Erstreckung durch die Abstreiferplatte 172 hindurch und damit eine Ausdehnung in zur Werkzeugachse 156 radialer Richtung im Wesentlichen gleich groß wie eine Ausdehnung des Werkzeugs 154 in der zur Werkzeugachse 156 radialen Richtung, sodass das Werkzeug 154 durch die Durchgangsöffnung 178 hindurch greifen kann, beispielsweise mit etwas Spiel, aber im Wesentlichen kein freier Abstandsraum zwischen einem Rand der Durchgangsöffnung 178 und dem Werkzeug 154 vorhanden ist, wenn das Werkzeug 154 durch die Durchgangsöffnung 178 hindurch greift.

Von der Abstreiferplatte 172, insbesondere von ihrem Rand, erstrecken sich in einer zu einer flächenmäßigen Ausdehnung der Abstreiferplatte 172 zumindest näherungsweise senkrechten Richtung Wandabschnitte 192 bis zu einem Deckelelement 194 hinweg, sodass ein Spanraum 196 in der Entspanungseinheit 174 von der Abstreiferplatte 172, den Wandabschnitten 192 und dem Deckelelement 194 begrenzt wird.

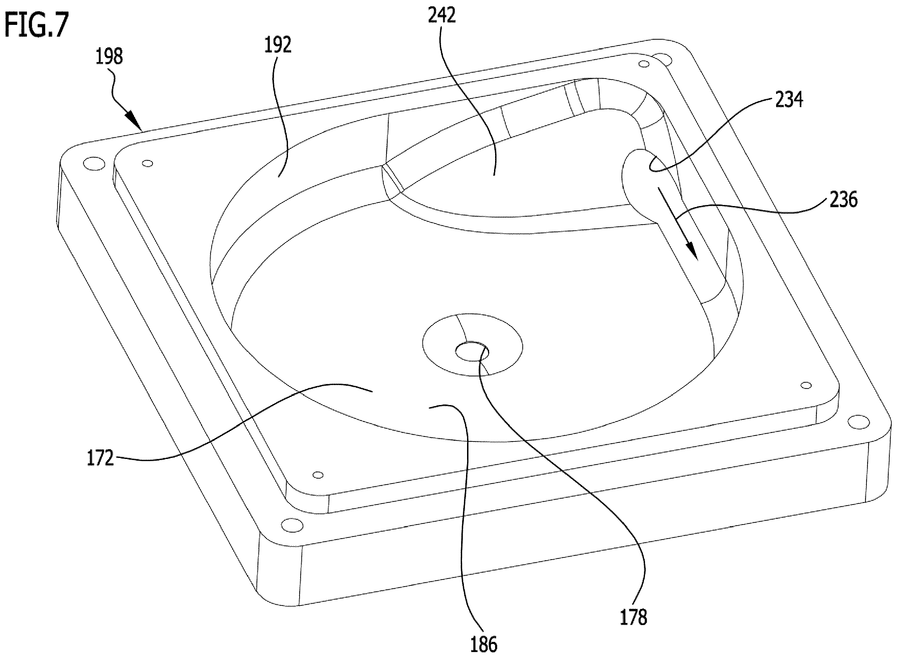

Vorzugsweise bilden die Abstreiferplatte 172 und die Wandabschnitte 192 zusammen ein einstückiges Abstreiferelement 198 aus, welches beispielhaft in Fig. 7 separat dargestellt ist.

In dem Deckelelement 194 ist eine Eingriffsöffnung 212 für das Werkzeug 194 ausgebildet, durch welche das Werkzeug 154 in den Spanraum 196 eingreift und sich bis zu der Durchgangsöffnung 178 der Abstreiferplatte 172 hindurch erstrecken kann, sodass die Eintrittsöffnung 212 und die Durchgangsöffnung 178 zusammen einen Durchgang 214 durch die Entspanungseinheit 174 für das Werkzeug 154 ausbilden.

Hierfür ist die Eingriffsöffnung 212 in der Vorschubrichtung 184 des Werkzeugs 154 der Durchgangsöffnung 178 gegenüberliegend angeordnet und vorzugsweise ist eine zu der Werkzeugachse 156 radiale Ausdehnung der Eingriffsöffnung 212 zumindest im Wesentlichen gleich groß wie die radiale Ausdehnung des Werkzeugs 154 zur Werkzeugachse 156, sodass das Werkzeug 154 durch die Eingriffsöffnung 212 hindurch greifen kann, beispielsweise mit Spiel, aber bei dem eingreifenden Werkzeug 154 zwischen diesem und einem Rand der Eingriffsöffnung 212 im Wesentlichen kein freier Abstandsraum vorhanden ist.

Insbesondere definiert der Durchgang 214 eine geometrische Durchgangsachse 216, welche durch die Eingriffsöffnung 212 und die Durchgangsöffnung 178 hindurch verläuft und vorzugsweise im Wesentlichen mit der Werkzeugachse 156 zusammenfällt.

Günstigerweise erstreckt sich die Abstreiferplatte 172 zumindest näherungsweise senkrecht zur Durchgangsachse 216 flächenmäßig und die Auflageseite 176 und die dem Bearbeitungsraum 128 abgewandte und den Spanraum 196 begrenzende Seite 186 der Abstreiferplatte sind in zur axialen Richtung der Durchgangsachse 216 gegenüberliegende Seiten der Abstreiferplatte 172.

Vorteilhafterweise wird der Spanraum 196 in zur Durchgangsachse 216 axialer Richtung im Wesentlichen von der Abstreiferplatte 172 und dem Deckelelement 194 begrenzt und in zur Durchgangsachse 216 radialer Richtung von den Wandabschnitten 192, welche in einer Umlaufrichtung um die Durchgangsachse 216 geschlossen ausgebildet sind, begrenzt.

Vorzugsweise sind an dem Abstreiferelement 198, insbesondere an den Wandabschnitten 192 außerhalb des Spanraums 196 eine Stufe oder mehrere Stufen ausgebildet, mit welcher/welchen das Abstreiferelement 198 vorteilhafterweise passgenau in die Aussparung der Halteplatte 166 eingesetzt und in seiner Position festgelegt werden kann.

Ferner ist eine im Ganzen mit 222 bezeichnete Absaugvorrichtung vorgesehen zum Absaugen von Partikeln und/oder abgetrennten Spänen beim Bearbeiten eines Werkstückes.

Vorteilhafterweise ist die Absaugvorrichtung 222 zum Absaugen aus dem Spanraum 196 ausgebildet und weist insbesondere einen Absaugstutzen 224 auf, der in einer in den Spanraum 196 mündenden Absaugöffnung 226, die beispielsweise in dem Deckelelement 194 ausgebildet ist, sitzt.

Insbesondere ist die Absaugvorrichtung 222 so angeordnet und ausgebildet, dass ein Absaugbereich 228, aus welchem die Absaugvorrichtung 222 absaugt, die dem Bearbeitungsraum 128 abgewandte Seite 186 der Abstreiferplatte 172 umfasst, sodass die Abstreiferplatte 172 zwischen dem Bearbeitungsraum 128 und dem Absaugbereich 228 angeordnet ist. Vorteilhafterweise umfasst der Absaugbereich 228 zumindest einen Rand der Durchgangsöffnung 178 an der dem Bearbeitungsraum 128 abgewandten Seite 186.

Besonders vorteilhaft ist es, wenn der Spanraum 196 und seine begrenzenden Elemente, hier insbesondere die Wandabschnitte 192 und beispielsweise das Deckelelement 194 und die Abstreiferplatte 172, wirbelbegünstigend für ein von der Absaugvorrichtung 222 abgesaugtes Gas ausgebildet sind, das heißt insbesondere, dass die geometrische Form der begrenzenden Elemente derart ausgebildet ist, dass diese eine Wirbelbildung in einer von der Absaugvorrichtung 222 erzeugten Absaugströmung des abgesaugten Gases zumindest unterstützen.

Vorteilhafterweise ist ein Wirbelzentrum, um welches sich ein Wirbel oder mehrere Wirbel in einer Absaugströmung der Absaugvorrichtung 222 drehen, im Bereich der Durchgangsöffnung 178 und im Bereich des Durchganges 214 ausgebildet.

Vorteilhafterweise sind die Wandabschnitte 192 zumindest abschnittsweise bogenförmig um die Durchgangsöffnung 178 und die Durchgangsachse 216 herum günstigerweise zur Wirbelunterstützung ausgebildet.

Beispielsweise sind zumindest in einem Winkelbereich von zumindest etwa mindestens 180°, vorzugsweise zumindest etwa 270°, um die Durchgangsachse 216 herum die Wandabschnitte 192 bogenförmig, beispielsweise zumindest näherungsweise kreisförmig, ausgebildet.

Insbesondere ist eine Einlassöffnung 234 vorgesehen, welche in den Spanraum 196 mündet und durch welche eine Gasströmung zum Ausgleich des abgesaugten Gases in den Spanraum 196 eintreten kann.

Vorteilhafterweise ist eine durch die Einlassöffnung 234 definierte Einlassrichtung 236 für die eintretende Gasströmung im Wesentlichen entlang einer bogenförmigen Erstreckung eines Wandabschnittes 192 orientiert, sodass das eintretende Gas zumindest im Wesentlichen tangential zu der Bogenform des Wandabschnittes 192 möglichst ungehindert in den Spanraum 196 eintritt, sowie entlang des Wandabschnittes 192 und durch diesen abgelenkt weiterströmen kann.

Günstigerweise ist bei dem Abstreiferelement 198 eine über eine geometrische Fläche der dem Bearbeitungsraum 128 abgewendeten Seite 186 der Abstreiferplatte 172 insbesondere kontinuierlich erhebende Rampe 242 ausgebildet.

Eine Oberfläche der Rampe 242 geht in einem Übergangsbereich in die Oberfläche der dem Bearbeitungsraum 128 abgewandten Seite 186 der Abstreiferplatte 172 über und mit zunehmender Erstreckung der Rampe 242 von dem Übergangsbereich hinweg erhebt sich deren Oberfläche zunehmend zu einem erhabenen Abschnitt der Rampe 242, wobei in dem erhabenen Abschnitt die Oberfläche der Rampe 242 einen Abstand, der insbesondere in zu der Durchgangsachse 216 axialer Richtung gemessen wird, zu der Oberfläche der Abstreiferplatte 172, welche dem Bearbeitungsraum 128 abgewandt ist, aufweist.

Vorzugsweise ist die Absaugöffnung 226 im Bereich des erhabenen Abschnitts der Rampe 242, beispielsweise der Rampe gegenüberliegend in dem Deckelelement 194, ausgebildet.

Vorteilhafterweise ist der Wandabschnitt 192 von der Einlassöffnung 234 bis zu der Rampe 242 umlaufend um die Durchgangsachse 216 bogenförmig ausgebildet.

Besonders vorteilhaft ist es, wenn die Einlassöffnung 234 in der Rampe 242 in einen Abschnitt zwischen der sich zunehmenden erhebenden Oberfläche der Rampe 242 und der Abstreiferplatte 172 ausgebildet ist.

Kurz zusammengefasst sind somit insbesondere eine Ausbildung und Funktionsweise der Werkzeugmaschine und beispielsweise Vorteile derselben wie folgt.

Die Werkzeugmaschine 100 umfasst genau eine Bearbeitungsstation 122 oder mehrere Bearbeitungsstationen 122 und insbesondere eine Hubvorrichtung, mit welcher ein jeweiliges Oberteil 126 der einen Bearbeitungsstation 122 oder der mehreren Bearbeitungsstationen 122 gekoppelt ist.

An zumindest einer Bearbeitungsstation 122 weist eine Werkzeugvorrichtung 152 ein Werkzeug 154 auf, welches durch einen Antrieb angetrieben ist und/oder welches ein spanabhebendes Werkzeug 154 ist.

Hiermit lassen sich in Werkstücke in einfacher Weise Strukturen einformen, beispielsweise Sacklöcher oder anders geartete Aussparungen, wobei die Struktur des Werkstückes, beispielsweise ein Gefüge desselben, durch die spanabhebende Bearbeitung des Werkzeuges 154 im Wesentlichen unverändert bleibt.

Beispielsweise können so auch größere Werkstücke effizient in großer Stückzahl mit entsprechenden Strukturen ausgebildet werden, ohne dass die Werkzeugmaschine überdimensional größer werden muss und ohne dass mehrere Umformschritte erforderlich sind.

Besonders günstig ist es, wenn an der Bearbeitungsstation 122, insbesondere in einer Haltevorrichtung 162 derselben, eine Abstreiferplatte 172 mit einer Durchgangsöffnung 178 für das Werkzeug 154 vorgesehen ist.

Bei einer Bearbeitung eines Werkstückes in dem Bearbeitungsraum 128 durch das Werkzeug 154, welches durch die Durchgangsöffnung 178 der Abstreiferplatte 172 hindurch greift, liegt die Abstreiferplatte 172 mit ihrer Auflageseite 176 auf dem Werkstück auf und durch das Werkzeug 154 abgetrennte Späne gelangen insbesondere durch die Spannuten des Werkzeugs 154, auf die dem Bearbeitungsraum 128 abgewandten Seite 186 der Abstreiferplatte 172 vorzugsweise in einen Spanraum 196, sodass eine Verunreinigung des Werkstücks durch abgetrennte Späne und beispielsweise kleinere Partikel zumindest reduziert wird.

Erfindungsgemäss ist eine Absaugvorrichtung 222 vorgesehen, deren Absaugbereich 228, welchem die Absaugvorrichtung 222 absaugt, in dem Spanraum 196 ausliegt, sodass die abgetrennten Späne und beispielsweise Partikel abgesaugt werden.

Besonders günstig ist es, wenn die den Spanraum 196 begrenzenden Elemente wirbelbegünstigend ausgebildet sind, sodass durch die Absaugung in dem Gas, insbesondere der Luft, in dem Spanraum 196 zumindest ein Wirbel entsteht und so ein Entfernen der Späne und beispielsweise von Partikeln verbessert wird.

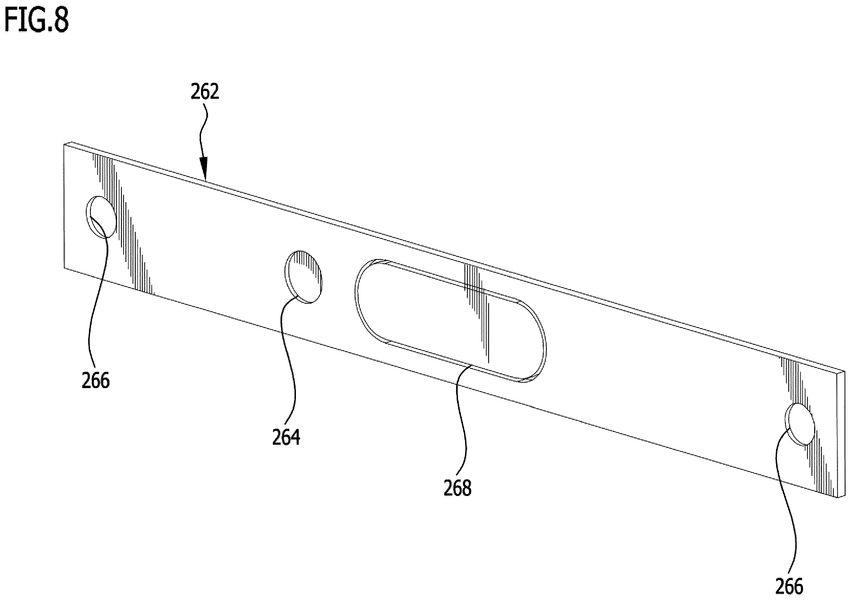

Ein Beispiel eines zu bearbeitenden und bearbeiteten Werkstücks 262 ist beispielhaft in Fig. 8 dargestellt.

Bei dem Werkstück 262, insbesondere einem Flacherzeugnis, ist insbesondere ein Sackloch 264 und/oder sind durchgehende Löcher 266 und beispielsweise eine Berstmembran 268 auszubilden.

Dabei kann das Sackloch 264 und/oder die durchgehenden Löcher 266 mit der Werkzeugmaschine 100 in einfacher Weise spanabhebend durch das Werkzeug 154, insbesondere einem Fräser oder Bohrer, ausgebildet werden.

Außerdem kann beispielsweise ein Sollbruchstellenabschnitt für die Berstmembran 266 insbesondere mit einem druckumformenden Werkzeug eingeprägt werden.

Bei Varianten des Ausführungsbeispiels, bei welchen eine Werkzeugvorrichtung 152 einer Bearbeitungsstation 122 das spanabhebende und/oder angetriebene Werkzeug 154 und das druckumformende Werkzeug aufweist, erfolgt die Bearbeitung durch diese in einem Bearbeitungsschritt.

Bei Varianten, bei welchen Werkzeugvorrichtungen 152 unterschiedlicher Bearbeitungsstationen 122 das spanabhebende und/oder angetriebene Werkzeug 154 und das druckumformende Werkzeug aufweisen, erfolgt die Bearbeitung durch diese bei einem Werkstück in unterschiedlichen Bearbeitungsschritten. Da jedoch die Werkzeugvorrichtungen 152 vorzugsweise an die gleiche Hubvorrichtung gekoppelt sind, erfolgt bei einem Hub durch beide Werkzeuge eine Bearbeitung, aber an unterschiedlichen Werkstücken, welche getrennt voneinander sein können oder unterschiedliche Bereiche eines Halbzeugs sind.

Beispielsweise wird bei einem weiteren Bearbeitungsschritt das Werkstück von einem das Rohmaterial für das Erzeugnis bereitstellenden Halbzeug, beispielsweise einem Blech, abgetrennt.

Bei einer Variante der Werkzeugmaschine 100 ist diese als Einzelstationmaschine ausgebildet, wie beispielhaft in den Fign. 1 und 2 dargestellt ist.

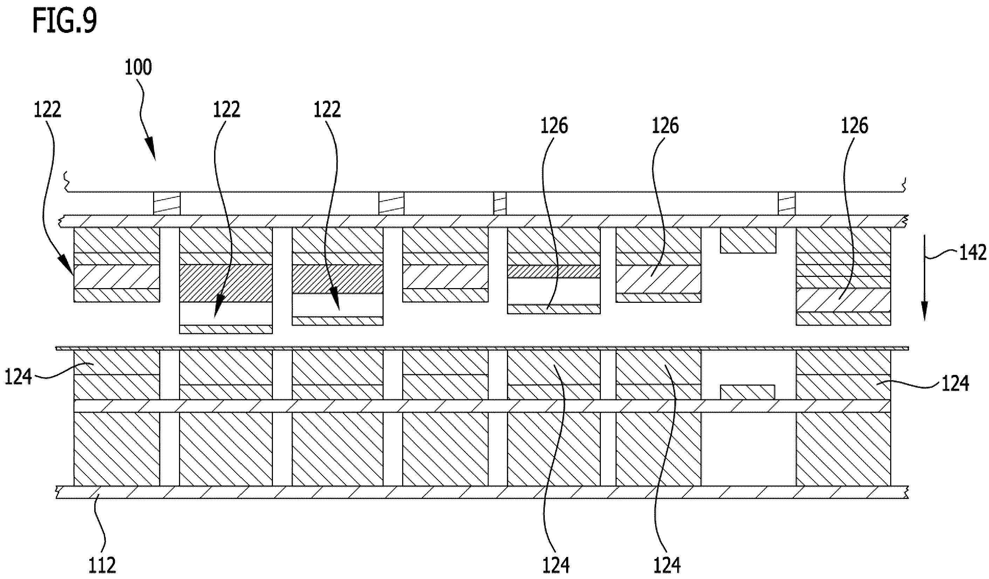

Bei anderen Varianten der Werkzeugmaschine 100 ist diese eine Folgeverbundwerkzeugmaschine 100, wie beispielhaft in Fig. 9 dargestellt ist, ausgebildet mit mehreren Bearbeitungsstationen 122, welche jeweils ein jeweiliges mit dem Maschinengestell 112 fest und starr verbundenes Unterteil 124 und ein jeweiliges relativ zu dem Unterteil 124 in der Hubrichtung 142 verfahrbares Oberteil 126 aufweisen, und wobei zumindest die meisten Oberteile 126 mit einer jeweiligen Werkzeugvorrichtung 152 mit zumindest einem Werkzeug 154 ausgerüstet sind.

Insbesondere sind die jeweiligen Oberteile 126 der Bearbeitungsstationen 122 an die Hubvorrichtung gekoppelt und werden bei einer Hubbewegung der Hubvorrichtung gemeinsam in die Hubrichtung 142 auf das jeweilige Unterteil 124 zu verfahren.

Insbesondere wird somit bei jeder Hubbewegung der Hubvorrichtung an zumindest mehreren der Bearbeitungsstationen 122 ein jeweiliges entsprechendes Werkstück durch das jeweilige Werkzeug 154 bearbeitet.

Dabei ist zumindest eine Bearbeitungsstation 122 der mehreren Bearbeitungsstationen wie voranstehend erläutert ausgebildet.

Die Folgeverbundwerkzeugmaschine 100 umfasst insbesondere ferner eine Transportvorrichtung, um ein Werkstück von einer Bearbeitungsstation 122 zur nächsten zu transportieren, sodass dieses schrittweise von Werkzeugen 154 der unterschiedlichen Bearbeitungsstationen 122 bearbeitet wird.

Bei einigen bevorzugten Varianten ist das Werkzeug 154 stationär in der Werkzeugvorrichtung 152 angeordnet.

Dabei ist das Werkzeug 154 insbesondere ortsfest in der Werkzeugvorrichtung 152 befestigt und beispielsweise lediglich um die Werkzeugachse 156 rotierbar gelagert.

Der Vorschub wird dabei von der Hubvorrichtung bereitgestellt.

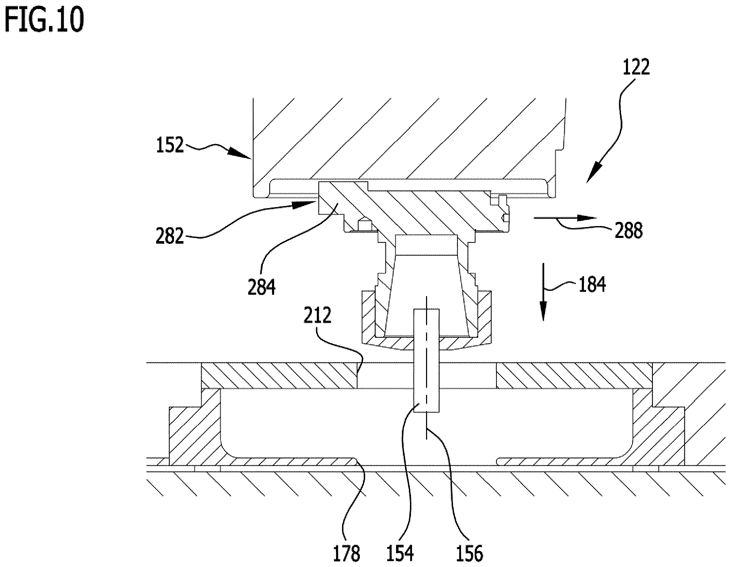

Bei einigen vorteilhaften Varianten einer Bearbeitungsstation 122 weist deren Werkzeugvorrichtung 152 mit dem angetriebenen und/oder spanabhebenden Werkzeug 154 ein Schiebersystem 282 mit zumindest einem Schieber 284 auf, wie beispielhaft in Fig. 10 dargestellt ist.

Dabei ist der zumindest eine Schieber 284 insbesondere quer, beispielsweise zumindest näherungsweise senkrecht, zu der Vorschubrichtung 184 des Werkzeugs 154 und/oder in zur Werkzeugachse 156 radialer Richtung insbesondere linear in einer Schieberrichtung 288 beweglich gelagert.

An dem Schieber 284 ist das Werkzeug 154 befestigt, sodass dieses mit dem Schieber 284 mitbewegt wird. Somit ist das Werkzeug 154 in zumindest einem weiteren Freiheitsgrad durch den Schieber 284 bewegbar und komplexere, das heißt insbesondere nicht rotationssymmetrische, Strukturen können in dem zu bearbeitenden Werkstück ausgebildet werden, vorzugsweise durch Spanabhebung, insbesondere durch Fräsen.

Insbesondere die Durchgangsöffnung 178 und beispielsweise die Eingriffsöffnung 212 sind dabei entsprechend der insbesondere linearen Verfahrbarkeit des Werkzeugs 154 durch den zumindest einen Schieber 284 entsprechend ausgebildet, weisen also vorzugsweise eine längliche Erstreckung in der Schieberrichtung 288 auf, in welcher das Werkzeug 154 durch den Schieber 284 bewegbar ist.

Insbesondere ist auch bei diesen Varianten das Werkzeug 154 um die Werkzeugachse 156 rotierbar gelagert.

### BEZUGSZEICHENLISTE

- 100: Werkzeugmaschine
- 112: Maschinengestell
- 114: Maschinenfuß
- 122: Bearbeitungsstation
- 124: Unterteil
- 126: Oberteil
- 128: Bearbeitungsraum
- 132: Auflage
- 142: Hubrichtung
- 144: starres Rahmengestell
- 146: Oberplatte
- 148: Befestigungsplatte
- 152: Werkzeugvorrichtung
- 154: Werkzeug
- 156: Werkzeugachse
- 158: Befestigungseinrichtung
- 162: Haltevorrichtung
- 164: Feder
- 166: Halteplatte
- 168: Lager
- 169: Abstandhalter
- 172: Abstreiferplatte
- 174: Entspanungseinheit
- 176: Auflageseite
- 178: Durchgangsöffnung
- 184: Vorschubrichtung
- 186: Bearbeitungsraum abgewandte Seite
- 192: Wandabschnitt
- 194: Deckelelement
- 196: Spanraum
- 198: Abstreiferelement
- 212: Eingriffsöffnung
- 214: Durchgang
- 216: Durchgangsachse
- 222: Absaugvorrichtung
- 224: Absaugstutzen
- 226: Absaugöffnung
- 228: Absaugbereich
- 234: Einlassöffnung
- 236: Einlassrichtung
- 242: Rampe
- 262: Werkstück
- 264: Sackloch
- 266: durchgehendes Loch
- 268: Berstmembran
- 282: Schiebersystem
- 284: Schieber
- 288: Schieberrichtung

## Patentansprüche

1. Werkzeugmaschine (100), die eine Presse und/oder Stanzmaschine ist, mit einer Hubvorrichtung (142) für zumindest eine ein Werkzeug (154) umfassende Werkzeugvorrichtung (152), wobei das Werkzeug (154) ein angetriebenes und/oder spanabhebendes Werkzeug (154) ist,
**dadurch gekennzeichnet, dass**
die Werkzeugmaschine (100) einen Spanraum (196) umfasst, wobei der Spanraum (196) einen Durchgang (214) für das Werkzeug (154) aufweist und das Werkzeug (154) zumindest bei einer Bearbeitung eines Werkstücks durch den Durchgang (214) durch den Spanraum (196) hindurch ragt,
die Werkzeugmaschine (100) eine Absaugvorrichtung (222) zum Absaugen insbesondere von mit dem Werkzeug (154) abgetrennten Spänen und/oder von Schmutzpartikeln umfasst und ein Absaugbereich (228) der Absaugvorrichtung (222) in dem Spanraum (196) liegt, mehrere Werkzeuge an die Hubvorrichtung (142) gekoppelt sind.

2. Werkzeugmaschine (100) nach Anspruch 1, **dadurch gekennzeichnet, dass** das Werkzeug (154) für eine Rotation bei einer Bearbeitung eines Werkstückes um eine Werkzeugachse (156) rotierbar gelagert und angetrieben in der Werkzeugvorrichtung (152) angeordnet ist, wobei insbesondere das Werkzeug (154) ein Bohrer oder Fräser ist.

3. Werkzeugmaschine (100) nach einem der voranstehenden Ansprüche, **dadurch gekennzeichnet, dass** die Werkzeugvorrichtung (152) einen Antrieb für das angetriebene Werkzeug (154) umfasst.

4. Werkzeugmaschine (100), nach einem der voranstehenden Ansprüche, **dadurch gekennzeichnet, dass** diese eine Abstreiferplatte (172) umfasst und die Abstreiferplatte (172) eine Durchgangsöffnung (178) für ein ihr zugeordnetes Werkzeug (154) der Werkzeugmaschine (100), umfasst, insbesondere ist ferner vorgesehen,
- dass insbesondere zumindest bei einer Bearbeitung eines Werkstücks das zugeordnete Werkzeug (154) durch die Durchgangsöffnung (178) der Abstreiferplatte (172) hindurchgreift und/oder
- dass insbesondere die Durchgangsöffnung (178) in der Abstreiferplatte (172) eine geometrische Form aufweist, die einer in einem zu bearbeitenden Werkstück durch das Werkzeug (154) auszuformenden Struktur entspricht und/oder
- dass insbesondere zumindest in einer Richtung eine Ausdehnung der Durchgangsöffnung (178) in der Abstreiferplatte (172) einer radialen Ausdehnung des Werkzeugs (154) entspricht, wobei die radiale Ausdehnung in einer radialen Richtung einer Werkzeugachse (156) gemessen wird und die axiale Richtung der Werkzeugachse (156) einer Vorschubrichtung (184) des Werkzeugs (154) entspricht.

5. Werkzeugmaschine (100) nach einem der voranstehenden Ansprüche, **dadurch gekennzeichnet, dass** die Werkzeugvorrichtung (152) zumindest einen Schieber (284) aufweist, an welchen das Werkzeug (154) gekoppelt ist und mit welchem das Werkzeug (154) insbesondere linear verfahrbar ist,
wobei insbesondere eine Durchgangsöffnung (178) in einer Abstreiferplatte (172) eine Breite aufweist, die einer radialen Ausdehnung des Werkzeugs (154) bezüglich einer Werkzeugachse (156) entspricht, wobei eine axiale Richtung der Werkzeugachse (156) einer Vorschubrichtung (184) des Werkzeugs entspricht, und eine längliche Ausdehnung der Durchgangsöffnung (178) einem Verfahrweg des zumindest einen Schiebers (284) entspricht.

6. Werkzeugmaschine (100) nach einem der voranstehenden Ansprüche, **dadurch gekennzeichnet, dass** eine Abstreiferplatte (172) gegenüberliegend zu einer Werkstückauflage (132) angeordnet ist und ein Bearbeitungsraum (128) zwischen der Werkstückauflage (132) und der Abstreiferplatte (172) angeordnet ist und insbesondere von diesen an gegenüberliegenden Seiten begrenzt wird.

7. Werkzeugmaschine (100) nach einem der voranstehenden Ansprüche, **dadurch gekennzeichnet, dass** eine Haltevorrichtung (162) für ein Werkstück eine Abstreiferplatte (172) umfasst, wobei insbesondere die Haltevorrichtung federbeaufschlagt gelagert ist.

8. Werkzeugmaschine (100), nach einem der voranstehenden Ansprüche, **dadurch gekennzeichnet,**
- **dass** der Spanraum (196) durch Wandabschnitte und/oder einen Bodenabschnitt und/oder einen Deckelabschnitt begrenzt ist und/oder
- **dass** der Spanraum (196) derart angeordnet ist, dass bei einer Bearbeitung eines Werkstücks von dem Werkzeug (154) abgetrennte Späne insbesondere über Spannuten in dem Werkzeug (154) in den Spanraum (196) gelangen.

9. Werkzeugmaschine (100), nach einem der Ansprüche 4 bis 8, **dadurch gekennzeichnet,**
- **dass** die Abstreiferplatte (172) den Spanraum (196) von dem Bearbeitungsraum (128) trennt und/oder
- **dass** der Spanraum (196) auf einer einem zu bearbeitenden Werkstück zugewandten Seite von der Abstreiferplatte (172) begrenzt wird.

10. Werkzeugmaschine (100) nach einem der voranstehenden Ansprüche, **dadurch gekennzeichnet,**
- **dass** eine Abstreiferplatte (172) zwischen dem Absaugbereich (228), aus welchem die Absaugvorrichtung (222) absaugt, und einem Bearbeitungsraum (128) angeordnet ist und/oder
- **dass** der Spanraum (196) mit dem Absaugbereich (228) wirbelbegünstigend ausgebildet ist und/oder
- **dass** der Spanraum (196) mit dem Absaugbereich (228) zumindest abschnittsweise von zumindest einem bogenförmigen Wandabschnitt (192) begrenzt wird.

11. Werkzeugmaschine (100) nach einem der voranstehenden Ansprüche, **dadurch gekennzeichnet, dass** eine Einlassöffnung (234) für eine einströmende Gasströmung, durch welche aus dem Absaugbereich (228) abgesaugtes Gas ersetzt wird, in den Spanraum (196) mündet, wobei insbesondere eine durch einen die Einlassöffnung (234) umfassenden Einlass definierte Einlassrichtung (236) für die in den Spanraum (196) einströmende Gasströmung zumindest im Wesentlichen in Richtung einer lokalen Erstreckung eines den Spanraum (196) begrenzenden und an die Einlassöffnung angrenzend angeordneten Wandabschnittes (156) orientiert ist, insbesondere zumindest im Wesentlichen tangential zu einer Bogenform des Wandabschnittes (156) orientiert ist.

12. Werkzeugmaschine (100) nach einem der voranstehenden Ansprüche, **dadurch gekennzeichnet, dass** eine sich in vertikaler Richtung insbesondere zunehmend erhebende Rampe (242) vorgesehen ist, welche insbesondere eine abzusaugende Gasströmung in vertikaler Richtung ablenkt.

13. Werkzeugmaschine (100) nach einem der voranstehenden Ansprüche, **dadurch gekennzeichnet, dass** die eine Hubvorrichtung für eine in einer Hubrichtung (142) ausgerichtete Linearbewegung der zumindest einen Werkzeugvorrichtung (152) ausgebildet ist.

14. Werkzeugmaschine (100) nach dem voranstehenden Anspruch, **dadurch gekennzeichnet, dass** die Werkzeugmaschine (100) eine Werkzeugfolgeverbundmaschine ist.

15. Fertigungsstraße umfassend zumindest eine Werkzeugmaschine (100) nach einem der voranstehenden Ansprüche.

## Claims

1. Machine tool (100) which is a press and/or punching machine, comprising a lifting device (142) for at least one tool device (152) having a tool (154), the tool (154) being a driven and/or cutting tool (154),
**characterized in that**
the machine tool (100) comprises a chip space (196), the chip space (196) having a passage (214) for the tool (154) and the tool (154) projecting through the chip space (196) through the passage (214) at least during machining of a workpiece,
the machine tool (100) comprises a suction device (222) for suctioning off in particular chips separated by the tool (154) and/or dirt particles, and a suction region (228) of the suction device (222) is located in the chip space (196), a plurality of tools are coupled to the lifting device (142).

2. Machine tool (100) according to claim 1, **characterized in that** the tool (154) is rotatably mounted and driven in the tool device (152) for rotation about a tool axis (156) during machining of a workpiece, in particular the tool (154) being a drill or milling cutter.

3. Machine tool (100) according to either of the preceding claims,
**characterized in that** the tool device (152) comprises a drive for the driven tool (154).

4. Machine tool (100) according to any of the preceding claims,
**characterized in that** this comprises a stripper plate (172) and the stripper plate (172) comprises a through-opening (178) for a tool (154) of the machine tool (100) assigned thereto, in particular it is further provided
- that in particular at least during machining of a workpiece, the assigned tool (154) extends through the through-opening (178) of the stripper plate (172) and/or
- that in particular the through-opening (178) in the stripper plate (172) has a geometric shape which corresponds to a structure to be formed in a workpiece to be machined by the tool (154) and/or
- that in particular at least in one direction an extension of the through-opening (178) in the stripper plate (172) corresponds to a radial extension of the tool (154), the radial extension being measured in a radial direction of a tool axis (156) and the axial direction of the tool axis (156) corresponding to a feed direction (184) of the tool (154).

5. Machine tool (100) according to any of the preceding claims,
**characterized in that** the tool device (152) has at least one slider (284) to which the tool (154) is coupled and with which the tool (154) can be moved, in particular linearly,
in particular a through-opening (178) in a stripper plate (172) having a width which corresponds to a radial extension of the tool (154) with respect to a tool axis (156), an axial direction of the tool axis (156) corresponding to a feed direction (184) of the tool, and an elongate extension of the through-opening (178) corresponding to a travel path of the at least one slider (284).

6. Machine tool (100) according to any of the preceding claims,
**characterized in that** a stripper plate (172) is arranged opposite a workpiece support (132) and a machining space (128) is arranged between the workpiece support (132) and the stripper plate (172) and is in particular delimited thereby on opposite sides.

7. Machine tool (100) according to any of the preceding claims,
**characterized in that** a holding device (162) for a workpiece comprises a stripper plate (172), in particular the holding device being mounted in a spring-loaded manner.

8. Machine tool (100) according to any of the preceding claims,
**characterized in that**
- the chip space (196) is delimited by wall portions and/or a base portion and/or a cover portion and/or
- the chip space (196) is arranged in such a way that chips separated by the tool (154) during machining of a workpiece reach the chip space (196), in particular via chip grooves in the tool (154).

9. Machine tool (100) according to any of claims 4 to 8, **characterized in that**
- the stripper plate (172) separates the chip space (196) from the machining space (128) and/or
- the chip space (196) is delimited by the stripper plate (172) on a side facing a workpiece to be machined.

10. Machine tool (100) according to any of the preceding claims,
**characterized in that**
- a stripper plate (172) is arranged between the suction region (228) from which the suction device (222) suctions and a machining space (128) and/or
- the chip space (196) having the suction region (228) is designed to promote turbulence and/or
- the chip space (196) having the suction region (228) is delimited at least in portions by at least one arcuate wall portion (192).

11. Machine tool (100) according to any of the preceding claims,
**characterized in that** an inlet opening (234) for an inflowing gas flow, through which gas suctioned from the suction region (228) is replaced, opens into the chip space (196),
in particular an inlet direction (236) defined by an inlet that comprises the inlet opening (234) for the gas flow that flows into the chip space (196) being oriented at least substantially in the direction of a local extent of a wall portion (156) that delimits the chip space (196) and is arranged adjacent to the inlet opening, in particular being oriented at least substantially tangentially to an arcuate shape of the wall portion (156).

12. Machine tool (100) according to any of the preceding claims,
**characterized in that** a ramp (242) is provided which in particular rises increasingly in the vertical direction and which in particular deflects a gas flow to be suctioned off in the vertical direction.

13. Machine tool (100) according to any of the preceding claims,
**characterized in that** the lifting device is designed for a linear movement of the at least one tool device (152) aligned in a lifting direction (142).

14. Machine tool (100) according to the preceding claim,
**characterized in that** the machine tool (100) is a progressive tool machine.

15. Production line comprising at least one machine tool (100) according to any of the preceding claims.

## Revendications

1. Machine-outil (100), laquelle est une presse et/ou une machine à estamper, comportant un dispositif de levage (142) pour au moins un dispositif à outil (152) comprenant un outil (154), dans laquelle l'outil (154) est un outil entraîné et/ou un outil d'enlèvement de copeaux (154),
**caractérisée en ce que**
la machine-outil (100) comprend un espace pour copeaux (196), dans laquelle l'espace pour copeaux (196) présente un passage (214) pour l'outil (154) et l'outil (154) fait saillie à travers l'espace pour copeaux (196) au moins lors d'un usinage d'une pièce à travers le passage (214),
la machine-outil (100) comprend un dispositif d'aspiration (222) pour l'aspiration en particulier de copeaux séparés avec l'outil (154) et/ou de particules de saleté et une zone d'aspiration (228) du dispositif d'aspiration (222) se trouve dans l'espace pour copeaux (196), plusieurs outils sont accouplés au dispositif de levage (142).

2. Machine-outil (100) selon la revendication 1, **caractérisée en ce que** l'outil (154) est disposé dans le dispositif à outil (152) et monté de manière à pouvoir tourner autour d'un axe d'outil (156) et être entraîné pour une rotation lors d'un usinage d'une pièce, dans laquelle l'outil (154) est en particulier un foret ou une fraise.

3. Machine-outil (100) selon l'une des revendications précédentes,
**caractérisée en ce que** le dispositif à outil (152) comprend un entraînement pour l'outil (154) entraîné.

4. Machine-outil (100) selon l'une des revendications précédentes,
**caractérisée en ce que** ladite machine-outil comprend une plaque de raclage (172) et la plaque de raclage (172) comprend une ouverture de passage (178) pour un outil (154) de la machine-outil (100) qui lui est associé, en particulier est en outre prévu
- **que,** en particulier au moins lors d'un usinage d'une pièce, l'outil (154) associé passe à travers l'ouverture de passage (178) de la plaque de raclage (172) et/ou
- **qu**'en particulier l'ouverture de passage (178) dans la plaque de raclage (172) présente une forme géométrique qui correspond à une structure à former par l'outil (154) dans une pièce à usiner et/ou
- **que,** en particulier, au moins dans une direction, une expansion de l'ouverture de passage (178) dans la plaque de raclage (172) correspond à une expansion radiale de l'outil (154), dans laquelle l'expansion radiale est mesurée dans une direction radiale d'un axe d'outil (156) et la direction axiale de l'axe d'outil (156) correspond à une direction d'avance (184) de l'outil (154).

5. Machine-outil (100) selon l'une des revendications précédentes,
**caractérisée en ce que** le dispositif à outil (152) présente au moins un coulisseau (284) auquel l'outil (154) est accouplé et avec lequel l'outil (154) peut être déplacé, en particulier linéairement,
dans laquelle, en particulier, une ouverture de passage (178) dans une plaque de raclage (172) présente une largeur qui correspond à une expansion radiale de l'outil (154) par rapport à un axe d'outil (156),
dans laquelle une direction axiale de l'axe d'outil (156) correspond à une direction d'avance (184) de l'outil, et une expansion longitudinale de l'ouverture de passage (178) correspond à une course de déplacement de l'au moins un coulisseau (284).

6. Machine-outil (100) selon l'une des revendications précédentes,
**caractérisée en ce qu'**une plaque de raclage (172) est disposée à l'opposé d'un support de pièce (132) et un espace d'usinage (128) est disposé entre le support de pièce (132) et la plaque de raclage (172) et est en particulier délimité par ceux-ci sur des côtés opposés.

7. Machine-outil (100) selon l'une des revendications précédentes,
**caractérisée en ce qu'**un dispositif de maintien (162) pour une pièce comprend une plaque de raclage (172), dans laquelle le dispositif de maintien est en particulier sollicité par un ressort.

8. Machine-outil (100) selon l'une des revendications précédentes,
**caractérisée en ce**
- **que** l'espace pour copeaux (196) est délimité par des sections formant paroi et/ou par une section formant fond et/ou par une section formant couvercle et/ou
- **que** l'espace pour copeaux (196) est disposé de telle sorte que, lors d'un usinage d'une pièce, des copeaux séparés de l'outil (154) parviennent dans l'espace pour copeaux (196), en particulier par l'intermédiaire de rainures pour copeaux dans l'outil (154).

9. Machine-outil (100) selon l'une des revendications 4 à 8, **caractérisé en ce**
- **que** la plaque de raclage (172) sépare l'espace pour copeaux (196) de l'espace d'usinage (128) et/ou
- **que** l'espace pour copeaux (196) est délimité par la plaque de raclage (172) sur un côté tourné vers une pièce à usiner.

10. Machine-outil (100), selon l'une des revendications précédentes,
**caractérisée en ce**
- **qu**'une plaque de raclage (172) est disposée entre la zone d'aspiration (228), à partir de laquelle le dispositif d'aspiration (222) aspire, et un espace d'usinage (128), et/ou
- **que** l'espace pour copeaux (196) est réalisé avec la zone d'aspiration (228) de manière à favoriser les tourbillons, et/ou
- **que** l'espace pour copeaux (196) comportant la zone d'aspiration (228) est délimité au moins dans certaines sections par au moins une section formant paroi (192) en forme d'arc.

11. Machine-outil (100) selon l'une des revendications précédentes,
**caractérisée en ce qu'**une ouverture d'entrée (234) pour un flux de gaz entrant, par lequel le gaz aspiré de la zone d'aspiration (228) est remplacé, débouche dans l'espace pour copeaux (196),
dans laquelle, en particulier, une direction d'entrée (236) définie par une entrée comprenant l'ouverture d'entrée (234) pour le flux de gaz entrant dans l'espace pour copeaux (196) est orientée au moins sensiblement en direction d'une extension locale d'une section formant paroi (156) délimitant l'espace pour copeaux (196) et est disposée de manière adjacente à l'ouverture d'entrée, en particulier est orientée au moins sensiblement tangentiellement à une forme d'arc de la section formant paroi (156).

12. Machine-outil (100) selon l'une des revendications précédentes,
**caractérisée en ce qu'**une rampe (242) qui s'élève en particulier de manière croissante dans la direction verticale est prévue, laquelle dévie en particulier un flux de gaz à aspirer dans la direction verticale.

13. Machine-outil (100) selon l'une des revendications précédentes,
**caractérisée en ce que** le dispositif de levage est réalisé pour un déplacement linéaire, aligné dans une direction de levage (142), de l'au moins un dispositif à outil (152).

14. Machine-outil (100) selon la revendication précédente,
**caractérisée en ce que** la machine-outil (100) est une machine-outil composée à pas progressif.

15. Chaîne de production comprenant au moins une machine-outil (100) selon l'une des revendications précédentes.
